# EUROPEAN PATENT APPLICATION

(11) **EP 4 339 870 A1**
(43) Date of publication of application: **20.03.2024**
(21) Application number: 23158964.9
(22) Date of filing: 28.02.2023
(51) Int. Cl.: G06Q 30/0202, G06Q 30/0204

(54) **INFORMATION PROCESSING APPARATUS, INFORMATION PROCESSING METHOD, AND COMPUTER-READABLE MEDIUM**

(30) Priority: 13.09.2022 JP 2022144962
(71) Applicant: KABUSHIKI KAISHA TOSHIBA, Minato-ku Tokyo 105-0023 (JP)
(72) Inventor: Nakata, Kouta, Tokyo (JP)
(74) Representative: Hoffmann Eitle

(57) **Abstract**

An information processing apparatus (100) includes: an acquisition unit (101) configured to acquire a plurality of pieces of purchasing data including a plurality of pieces of user identification information, a plurality of pieces of product identification information , and performance information including at least one of a price and a number of purchases; a status calculation unit (102) configured to perform matrix factorization of a purchase matrix with non-negative values calculated based on the performance information as element values, and calculate user hidden status information indicating a relation between the plurality of pieces of user identification information and hidden statuses related to purchasing, and product hidden status information indicating a relation between the hidden statuses and the plurality of pieces of product identification information; and an output control unit (111) configured to control output of at least one of the user hidden status information and the product hidden status information.

## Description

### FIELD

The present disclosure relates to an information processing apparatus, an information processing method, and a computer-readable medium.

### BACKGROUND

In corporate marketing, user analysis is conducted for effective product development and promotion. In the user analysis, hypotheses are formulated about users' purchasing preference types, such as "fond of sale" or "health trend", for example, and detailed analysis is conducted through interviews or panel surveys. Psychological factors of the purchase, such as the purchasing motivation and intention of the users, can be grasped from the purchasing preference types. This can result in significant benefits in a variety of situations, including product recommendations, product development, and optimization of the product assortment.

Meanwhile, purchasing data has been accumulated and utilized in recent years. In addition, technologies have been proposed to support the analysis of purchasing preference types by utilizing purchasing data.

### BRIEF DESCRIPTION OF THE DRAWINGS

Fig. 1 is a block diagram of an information processing apparatus according to a first arrangement;
Fig. 2 is a flowchart of analysis support processing in the first arrangement;
Fig. 3 is a diagram illustrating an example of a purchasing history data structure;
Fig. 4 is a diagram illustrating an example of product information;
Fig. 5 is a diagram illustrating an example of user information;
Fig. 6 is a diagram illustrating an example of a purchase matrix to be generated;
Fig. 7 is a diagram illustrating an example of product hidden status information;
Fig. 8 is a diagram illustrating an example of user hidden status information;
Fig. 9 is a diagram illustrating an example of display of product hidden status information;
Fig. 10 is a diagram illustrating an example of display of user hidden status information;
Fig. 11 is a block diagram of an information processing apparatus according to a second arrangement;
Fig. 12 is a flowchart of analysis support processing in the second arrangement;
Fig. 13 is a diagram illustrating an example of a result of classification into clusters;
Fig. 14 is a diagram illustrating an example of statistical information;
Fig. 15 is a diagram illustrating an example of display of user hidden status information for each cluster;
Fig. 16 is a block diagram of an information processing apparatus according to a third arrangement;
Fig. 17 is a flowchart of analysis support processing in the third arrangement;
Fig. 18 is a diagram illustrating an example of attention user labels;
Fig. 19 is a diagram illustrating an example of calculation of mean values of the user hidden status information;
Fig. 20 is a diagram illustrating an example of display of statistical information on user hidden status information for users of interest;
Fig. 21 is a block diagram of an information processing apparatus according to a fourth arrangement;
Fig. 22 is a flowchart of analysis support processing in the third arrangement;
Fig. 23 is a diagram illustrating an example of known information;
Fig. 24 is a block diagram of an information processing apparatus according to a fifth arrangement;
Fig. 25 is a flowchart of analysis support processing in the fifth arrangement;
Fig. 26 is a diagram illustrating an example of a result of classification into clusters and attention user labels;
Fig. 27 is a diagram illustrating an example of cluster ratios to all users;
Fig. 28 is a diagram illustrating an example of cluster ratios to users of interest;
Fig. 29 is a diagram illustrating an example of display of cluster information with large differences in cluster ratio;
Fig. 30 is a diagram illustrating an example of a screen displaying user and product information;
Fig. 31 is a diagram illustrating an example of a screen plotting the number of purchases by cluster; and
Fig. 32 is a hardware configuration diagram of the information processing apparatus according to the arrangements.

### DETAILED DESCRIPTION

According to an arrangement, an information processing apparatus includes an acquisition unit, a status calculation unit, and an output control unit. The acquisition unit is configured to acquire a plurality of pieces of purchasing data including any of a plurality of pieces of user identification information identifying a plurality of users, any of a plurality of pieces of product identification information identifying a plurality of products, and performance information including at least one of a price and a number of purchases of the plurality of products. The status calculation unit is configured to perform matrix factorization of a purchase matrix with the plurality of pieces of user identification information and the plurality of pieces of product identification information as row and column indices, respectively, and non-negative values calculated based on the performance information as element values, and calculate user hidden status information indicating a relation between the plurality of pieces of user identification information and hidden statuses related to purchasing, and product hidden status information indicating a relation between the hidden statuses and the plurality of pieces of product identification information. The output control unit is configured to control output of at least one of the user hidden status information and the product hidden status information.

Exemplary arrangements of an information processing apparatus will be explained below in detail with reference to the accompanying drawings.

As described above, technologies have been proposed to support the analysis of purchasing preference types by utilizing purchasing data. Purchasing data includes a purchasing history representing products purchased by individual users, in shopping in physical stores and on the Web, for example. Since purchasing behavior is considered to be a strong reflection of user preferences, purchasing data can be utilized for developing purchasing preference types. Developing purchasing preference types based on purchasing data can reduce the workload of an analyst, and purchasing preference types can also be expected to be developed based on objective facts, rather than only on experience and knowledge.

As a technology to support analysis of purchasing preference types by utilizing purchasing data, a technology has been proposed to support design of purchasing preference types with a high degree of agreement by quantitatively evaluating purchasing preference types by using the degree of agreement between a user's purchasing preference type and an actual product purchasing history. Such a technology enables a determination whether the purchasing preference type is appropriate by quantitatively evaluating the developed purchasing preference types, and enables updates, integration, and division of the purchasing preference types.

Such a technology is related to the quantitative evaluation of existing purchasing preference types. Thus, the developing of the base purchasing preference types will continue to rely on the experience and knowledge of the analyst, as in the past. Consequently, there could be cases where the analyst is overloaded with work in developing initial purchasing preference types, and cases where the analyst misses purchasing preference types.

The following arrangements use purchasing data to support developing purchasing preference types. For example, the analyst can present purchasing information to develop purchasing preference types.

### First Arrangement

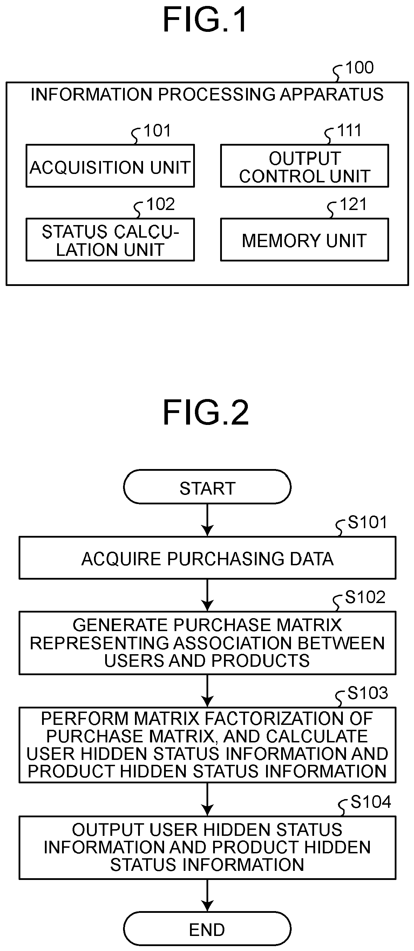

Fig. 1 is a block diagram illustrating an example of a configuration of an information processing apparatus 100 according to the first arrangement. As illustrated in Fig. 1, the information processing apparatus 100 includes an acquisition unit 101, a status calculation unit 102, an output control unit 111, and a memory unit 121.

The acquisition unit 101 acquires various types of information used in the information processing apparatus 100. For example, the acquisition unit 101 stores therein a plurality of pieces of purchasing data. The purchasing data includes one of a plurality of pieces of user identification information identifying a plurality of users (hereinafter referred to as "user ID"), one of a plurality of pieces of product identification information identifying a plurality of products (hereinafter referred to as "product ID"), and performance information. The performance information is, for example, information that includes at least one of the price of a product and the number of items purchased (number of purchases).

A method by which the acquisition unit 101 acquires information can be any method. For example, a method of receiving information transmitted from an external device and a method of reading information from a storage medium can be applied.

The status calculation unit 102 calculates information representing the hidden status of the purchasing data by analyzing the purchasing data. For example, the status calculation unit 102 obtains from the purchasing data a purchase matrix with a plurality of user IDs and a plurality of product IDs as row and column indices, respectively, and non-negative values calculated based on the performance information as element values. A non-negative element value is, for example, a non-negative value indicating whether a purchase has been made, the price, or the number of purchases.

The status calculation unit 102 performs matrix factorization of the purchase matrix and calculates user hidden status information and product hidden status information. The user hidden status information indicates the relation between the user IDs and hidden statuses related to purchasing. The product hidden status information indicates the relation between the hidden statuses and the product IDs.

The output control unit 111 controls output of various types of data used in the information processing apparatus 100. For example, the output control unit 111 controls output of at least one of the user hidden status information and the product hidden status information. A method by which the output control unit 111 outputs data can be any method. For example, a method of displaying the data on a display device such as a liquid crystal display, a method of transmitting the data to an external device (such as a server or another information processing apparatus), and a method of outputting the data to a recording medium by using an image forming device such as a printer can be applied.

Each of the above units (acquisition unit 101, status calculation unit 102, and output control unit 111) is realized by one or more hardware processors, for example. For example, each of the above units may be realized by having a central processing unit (CPU) or other processor execute a computer program, that is, by software. Each of the above units may be realized by a dedicated integrated circuit (IC) or other processor, that is, hardware. Each of the above units may be realized using both software and hardware together. When a plurality of processors are used, each processor may realize one of the units or two or more of the units.

The memory unit 121 stores therein various types of data used in the information processing apparatus 100. For example, the memory unit 121 stores therein purchasing data acquired by the acquisition unit 101 and results of processing by the other units.

The memory unit 121 can be made up of any commonly used storage media, such as flash memory, a memory card, random access memory (RAM), a hard disk drive (HDD), and an optical disk.

Analysis support processing by the information processing apparatus 100 according to the first arrangement will be described next. Fig. 2 is a flowchart illustrating an example of the analysis support processing in the first arrangement.

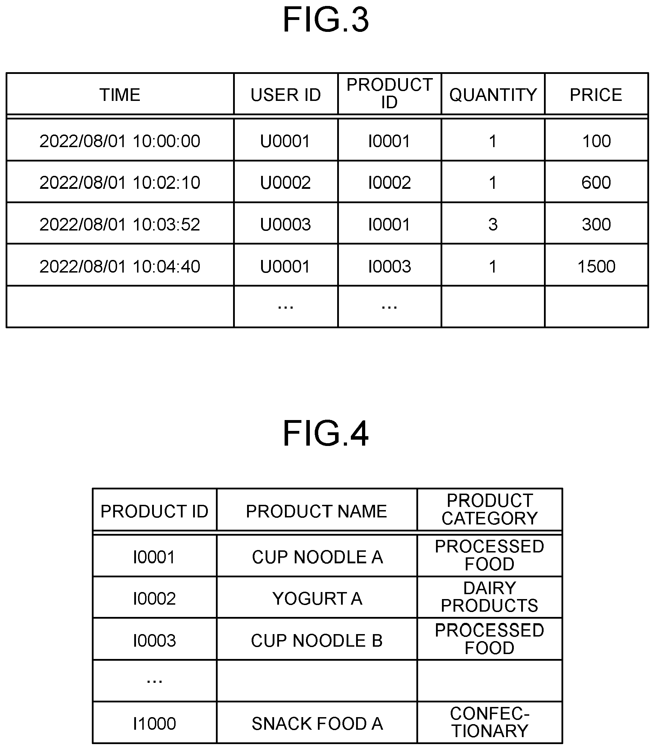

The acquisition unit 101 acquires purchasing data including a purchasing history (step S101). A purchasing history includes the user ID of the user who purchased the product and the product ID of the purchased product. Fig. 3 is a diagram illustrating an example of a purchasing history data structure. As illustrated in Fig. 3, the purchasing history includes the time of purchase, user ID, product ID, number of products purchased (quantity), and price.

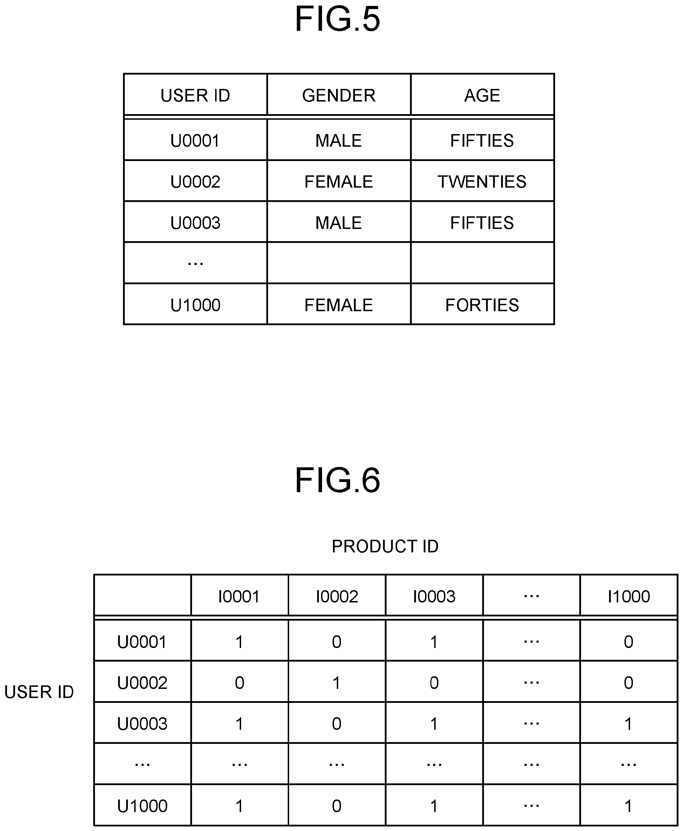

The purchasing data may further include information other than a purchasing history. Information other than a purchasing history is, for example, product information and user information. Fig. 4 is a diagram illustrating an example of product information. In the example in Fig. 4, the product information includes product names for the respective product IDs and product categories. Fig. 5 is a diagram illustrating an example of user information. In the example in Fig. 5, the user information includes gender and age for each user ID.

The description returns to Fig. 2. The status calculation unit 102 generates a purchase matrix representing the association between users and products from the purchasing history (step S102). For example, the status calculation unit 102 generates a purchase matrix with user IDs as row indices and product IDs as column indices, with non-negative values as element values. An element value is, for example, a non-negative value indicating whether a purchase has been made, the price, and the number of purchases. An element value may be a non-negative value obtained by operations using these values. For example, an element value may be a unit price indicating a price divided by the number of purchases.

Fig. 6 is a diagram illustrating an example of a purchase matrix to be generated. The purchase matrix in Fig. 6 is an example in which whether a purchase has been made is an element value. The purchase status is set to 1 if the user has purchased the product and 0 if the user has not purchased the product. Fig. 6 is also a diagram illustrating an example of a purchase matrix for 1,000 users and 1,000 different products. The conversion of a purchasing history (e.g., Fig. 3) to a purchase matrix (e.g., Fig. 6) can be accomplished by simple data processing.

The description returns to Fig. 2. The status calculation unit 102 performs matrix factorization of the purchase matrix and calculates user hidden status information and product hidden status information (step S103). A non-negative matrix factorization (NMF) techniques can be used for matrix factorization.

NMF is a matrix factorization technique that factorizes an N-by-M matrix Y with non-negative values into the product of an N-by-K matrix H with non-negative values and a K-by-M matrix U. NMF performs matrix factorization so that the values of each element are as close as possible between the matrix Y and the product HU of the matrix H and the matrix U. NMF is known to be capable of performing matrix factorization by iterative computation and relatively lightweight in computation. Here, the K indices of the factorized matrix represent hidden statuses and are set to values smaller than the values of N and M. For example, if NMF is applied by treating N face images of N-by-M pixels as a matrix, the face image can be factorized into a matrix of K face parts such as eyes and nose (matrix with K rows and M columns) and a matrix of weights of the parts for each image (matrix with N rows and K columns), which can be used for effective feature extraction.

For example, the status calculation unit 102 performs matrix factorization of the purchase matrix Y according to NMF, and treats one of the two matrices obtained by the factorization, matrix H, as user hidden status information and the other, matrix U, as product hidden status information.

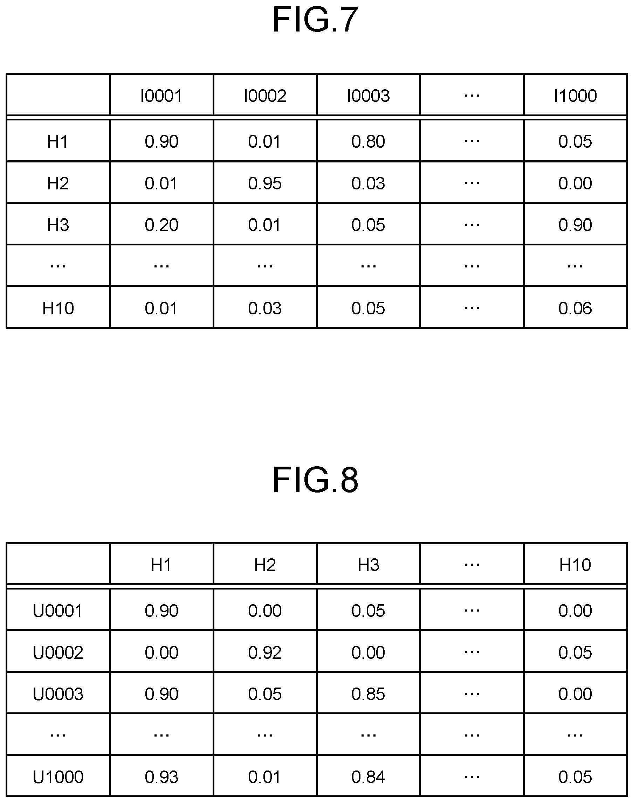

Fig. 7 is a diagram illustrating an example of product hidden status information. Fig. 8 is a diagram illustrating an example of user hidden status information. In the examples in Figs. 7 and 8, the number of hidden statuses is set to 10. The number of hidden statuses is set by the analyst, for example. The number of hidden statuses may be determined from the purchasing data to be analyzed, such as one-hundredth the number of users or products.

When 10 is set as the number of hidden statuses, for example, a purchase matrix with 1,000 rows and 1,000 columns as illustrated in Fig. 6 is factorized into a matrix of 1,000 rows and 10 columns of user hidden status information (Fig. 7) and a matrix of 10 rows and 1,000 columns of product hidden status information (Fig. 8).

The element values of 1 or 0 in the purchase matrix Y (e.g., Fig. 6) indicate whether a purchase has been made. Consequently, the hidden statuses of the matrix U, which represent the product hidden status information from the matrix factorization of the purchase matrix Y, can be interpreted as representing the purchase patterns of products purchased by the same user. The matrix H, which represents the user hidden status information, can be interpreted as representing the weight of the hidden statuses (product purchase pattern) for each user.

In the product hidden status information in Fig. 7, the column values (element values) for each product are obtained for the ten rows of hidden statuses. For example, for hidden status 1 (H1), the element values for products with product IDs "10001" and "10003" are larger. This can be interpreted as a tendency for the same user to purchase the product "10001" and the product "I0003", and this tendency being extracted as a purchase pattern associated with H1.

In the user hidden status information in Fig. 8, the column values (element values) for each hidden status are obtained for the 1,000 rows of users. For example, the user with user ID "U0003" has larger element values for hidden statuses H1 and H3. This can be interpreted as the user with user ID "U0003" being extracted to have a higher weight of purchase patterns corresponding to H1 and H3.

For convenience of explanation, a user the user ID of which is "*" may be denoted as user * (e.g., user U0003) in the following.

Calculating the product hidden status information and user hidden status information enables extraction of representative purchase patterns from the purchasing data of individual products and extraction of the extent to which each user fits into the extracted purchase patterns.

The description returns to Fig. 2. The output control unit 111 outputs (displays) the product hidden status information and the user hidden status information to the analyst (step S104).

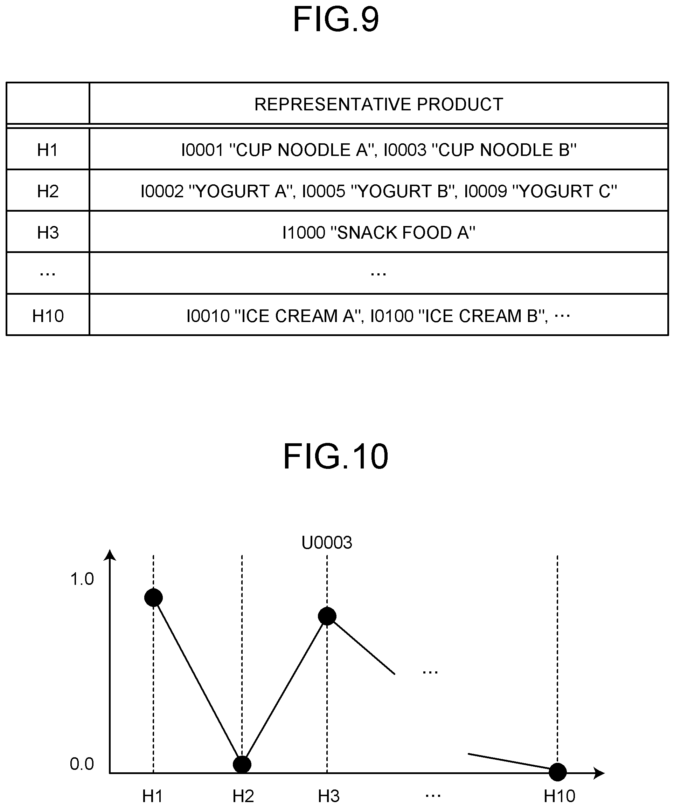

Fig. 9 is a diagram illustrating an example of display of the product hidden status information. In Fig. 9, products with large element values are displayed for each hidden status in the matrix U of the product hidden status information. The output control unit 111 may display products the element values of which are equal to or larger than a certain value, or may display a certain number of products in order of increasing element value. In the example in Fig. 9, the product names corresponding to the product IDs obtained from the product information included in the purchasing data are displayed.

Fig. 10 is a diagram illustrating an example of display of the user hidden status information. Fig. 10 illustrates an example of a graph plotting the weight of each hidden status (vertical axis), which is the element value of the matrix, with respect to the hidden status (horizontal axis) for user U0003. This example illustrates that as the weight of the hidden status is higher, the user is more likely to purchase products with a purchase pattern corresponding to the hidden status. As illustrated in Fig. 10, user U0003 has higher element values (weights) for H1 and H3. In conjunction with the information in Fig. 9, this proves that the following two purchase patterns have higher weight.
- The purchase pattern for purchasing the product "cup noodle A" the product ID of which is "I0001" and the product "cup noodle B" the product ID of which is "I0003"
- The purchase pattern for purchasing the product "snack food A" the product ID of which is "I1000"

Displaying the product hidden status information and the user hidden status information as illustrated in Figs. 9 and 10 allows the analyst to see what purchase patterns exist and how each user has those purchase patterns. This information is useful for developing purchasing preference types. The analyst can easily confirm from the information in Figs. 9 and 10, for example, that buyers who purchase cup noodles and goodies, such as user U0003, exist in the target purchasing data.

In this manner, the information processing apparatus according to the first arrangement outputs a plurality of pieces of information obtained from purchasing data by using matrix factorization. For example, the display of the product hidden status information and the user hidden status information allows the analyst to easily identify the characteristic purchase patterns of each user. In other words, the workload of user analysis (e.g., developing purchasing preference types) utilizing purchasing data can be reduced.

### Second Arrangement

The information processing apparatus of the second arrangement classifies a group of users with characteristic purchase patterns into a plurality of clusters by classifying the user hidden status information of each user according to the degree of similarity (or distance), and displays statistical information for each of the clusters.

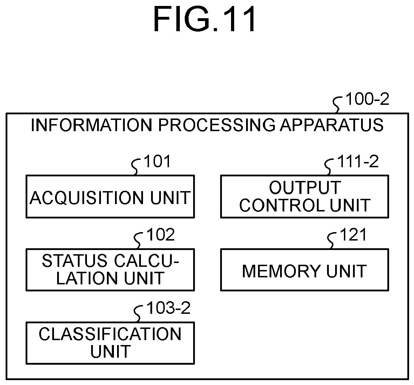

Fig. 11 is a block diagram illustrating an example of a configuration of an information processing apparatus 100-2 according to the second arrangement. As illustrated in Fig. 11, the information processing apparatus 100-2 includes the acquisition unit 101, the status calculation unit 102, a classification unit 103-2, an output control unit 111-2, and the memory unit 121.

The second arrangement differs from the first arrangement in the addition of the classification unit 103-2 and the function of the output control unit 111-2. Other configurations and functions are the same as those in Fig. 1, which is a block diagram of the information processing apparatus 100 according to the first arrangement, and the same reference signs are thus given and the explanation here is omitted.

The classification unit 103-2 classifies a plurality of user IDs included in the user hidden status information into a plurality of clusters by using the degree of similarity between the hidden status information. For example, the hidden status information for each user ID is represented by a vector with element values for the number of hidden statuses (e.g., 10). The classification unit 103-2 performs clustering so that user IDs with a high degree of similarity between vectors are classified into the same cluster. The degree of similarity may be expressed, for example, as the distance between vectors. In this case, a smaller distance indicates a higher degree of similarity.

Classification into clusters can be accomplished using common unsupervised clustering techniques. For example, the K-means method can be used to classify users with similar hidden status information into the same cluster.

The output control unit 111-2 differs from the output control unit 111 of the first arrangement in that it further includes a function to output statistical information on user hidden status information for each cluster.

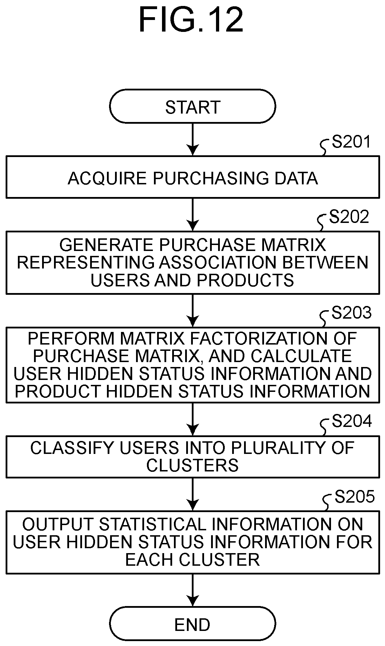

Analysis support processing by the information processing apparatus 100-2 according to the second arrangement will be described next with reference to Fig. 12. Fig. 12 is a flowchart illustrating an example of the analysis support processing in the second arrangement.

Steps S201 through S203 are the same as steps S101 through S103 in the information processing apparatus 100 according to the first arrangement, and the explanation of these steps is thus omitted.

The classification unit 103-2 classifies users (user IDs) into a plurality of clusters on the basis of the degree of similarity between user hidden status information (step S204).

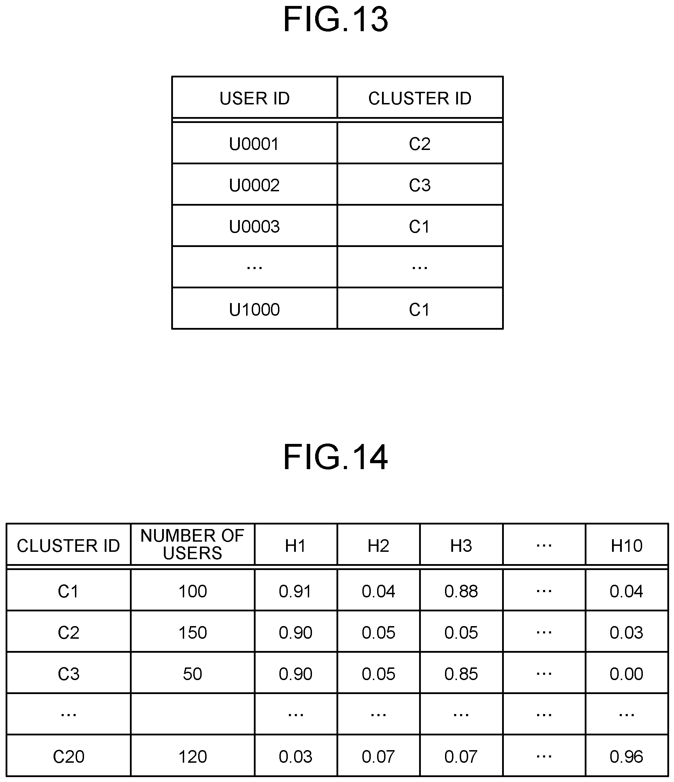

Fig. 13 is a diagram illustrating an example of a result of classification into clusters. Fig. 13 illustrates an example of a classification result with cluster IDs of classified clusters assigned to user IDs. In this example, user ID "U0003" and user ID "U1000" are both assigned the cluster ID "C1" for the same cluster because the user hidden status information is similar.

The number of clusters is set by the analyst, for example. The number of clusters may be determined from the purchasing data to be analyzed, such as one-fiftieth the number of users or products.

The description returns to Fig. 12. The output control unit 111-2 calculates and displays statistical information on user hidden status information for each cluster (step S205). The statistical information includes the mean, variance, and quantile values of the user hidden status information corresponding to the user IDs belonging to each cluster.

Fig. 14 is a diagram illustrating an example of statistical information. Fig. 14 illustrates an example of the statistical information of the mean values of the user hidden status information for user IDs belonging to each cluster ID. For convenience of explanation, a cluster the cluster ID of which is "*" may be denoted as cluster * (e.g., cluster C1) in the following. For example, if 100 users, including users U0001 and U0003, belong to cluster C1, the statistical information illustrated in Fig. 14 can be obtained by calculating the mean values of the user hidden status information corresponding to these 100 users. Other statistical information, such as variance values and quantile values, can be calculated in a similar manner.

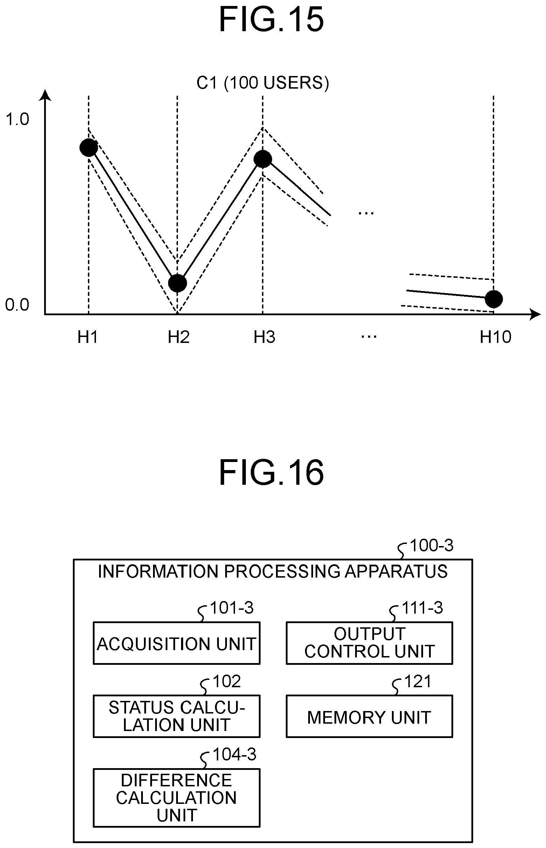

Fig. 15 is a diagram illustrating an example of display of the user hidden status information for each cluster. Fig. 15 illustrates an example of statistical information for cluster C1. In Fig. 15, the solid line indicates the mean values and the dashed lines indicate the quartile points. It can be confirmed that the 100 users belonging to cluster C1 are characterized by large element values for the hidden statuses of H1 and H3 on average, and that the variation in element values is also small based on the width of the quartile points. Displaying the information in Fig. 15 in conjunction with Fig. 9 allows the analyst to identify the number of users and purchase patterns corresponding to each cluster. For example, the analyst can find a cluster with 100 users who purchase cup noodles and snacks, such as cluster C1, with only a simple visual check.

In this manner, the information processing apparatus according to the second arrangement can output information for each cluster in which users are classified, further reducing the workload of user analysis utilizing purchasing data.

### Third Arrangement

An Information processing apparatus according to the third arrangement highlights and outputs items for which the difference in hidden statuses between specified users of interest and all users is large.

Fig. 16 is a block diagram illustrating an example of a configuration of an information processing apparatus 100-3 according to the third arrangement. As illustrated in Fig. 16, the information processing apparatus 100-3 includes an acquisition unit 101-3, the status calculation unit 102, a difference calculation unit 104-3, an output control unit 111-3, and the memory unit 121.

The third arrangement differs from the first arrangement in the addition of the difference calculation unit 104-3 and in the functions of the acquisition unit 101-3 and the output control unit 111-3. Other configurations and functions are the same as those in Fig. 1, which is a block diagram of the information processing apparatus 100 according to the first arrangement, and the same reference signs are thus given and the explanation here is omitted.

The acquisition unit 101-3 differs from the acquisition unit 101 of the first arrangement in that it further acquires specification of users of interest, which represent users to which attention is paid as the target of analysis among a plurality of users. For example, the analyst specifies conditions (user demographic conditions) about the users of interest. The acquisition unit 101-3 accepts the specification of conditions and acquires users who meet the conditions as the users of interest.

The difference calculation unit 104-3 calculates the difference between the hidden statuses for a plurality of users (e.g., all users) and the hidden status corresponding to the users of interest.

The output control unit 111-3 differs from the output control unit 111 of the first arrangement in that it further includes a function to output user hidden status information of the users of interest the calculated difference for which is larger than that of other users, in a mode different from that of other users.

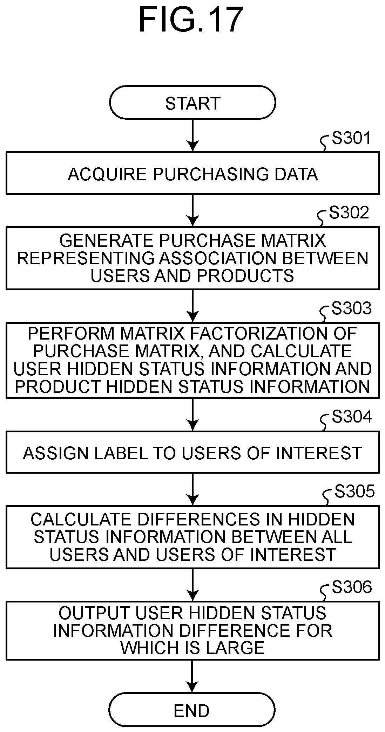

Analysis support processing by the information processing apparatus 100-3 according to the third arrangement will be described next with reference to Fig. 17. Fig. 17 is a flowchart illustrating an example of the analysis support processing in the third arrangement.

Steps S301 through S303 are the same as steps S101 through S103 in the information processing apparatus 100 according to the first arrangement, and the explanation of these steps is thus omitted.

The acquisition unit 101-3 assigns a label (attention user label) to a user of interest (step S304). For example, the acquisition unit 101-3 acquires the conditions of users of interest as specified by the analyst or other person, and designates users who meet the acquired conditions as the users of interest. The conditions may be specified in any way, for example:
- Users who purchased a certain product line
- Users with specific attributes, such as 40s, male
- Users with characteristics in purchasing data, such as a monthly purchase amount exceeding a certain value

Users of interest may be specified as a unit of clusters. In this case, the information processing apparatus 100-3 may include the classification unit 103-2 as in the second arrangement. The acquisition unit 101-3 may acquire users belonging to a specified cluster among the clusters classified by the classification unit 103-2 as users of interest.

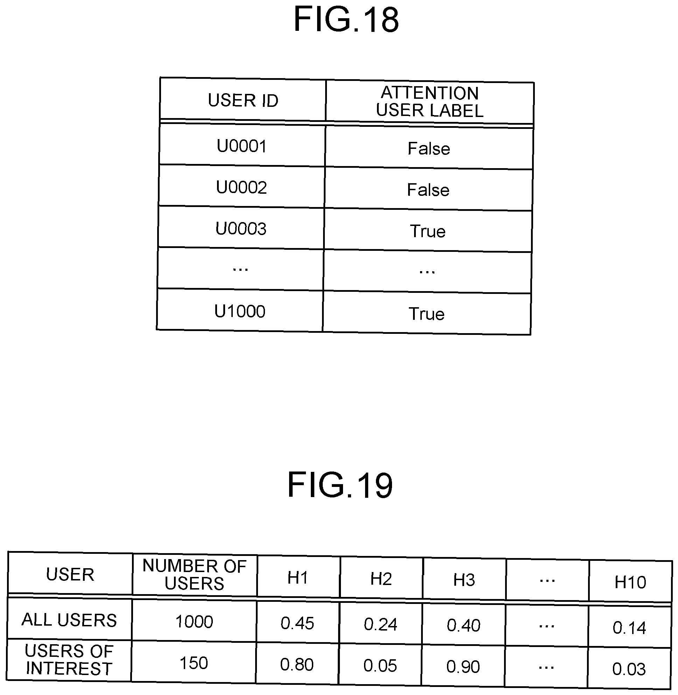

Fig. 18 is a diagram illustrating an example of attention user labels. In the example in Fig. 18, "True" is assigned as an attention user label for a user who is a user of interest, and "False" is assigned as an attention user label for the other users.

The description returns to Fig. 17. The difference calculation unit 104-3 calculates the difference between the hidden statuses for a plurality of users (e.g., all users) and the hidden status corresponding to the users of interest. For example, the difference calculation unit 104-3 calculates statistical information of the user hidden status information of all users and statistical information of the user hidden status information of the users of interest, and calculates the difference between the two. The statistical information of the user hidden status information includes the mean, variance, and quantile values as in the second arrangement.

Fig. 19 is a diagram illustrating an example of calculation of mean values of the user hidden status information relative to all users and the users of interest. In this example, 150 users of interest are acquired. Mean values of the user hidden status information for all 1,000 users and mean values of the user hidden status information for 150 users of interest are calculated.

The description returns to Fig. 17. The output control unit 111-3 displays the user hidden status information of the users of interest the calculated difference for which is larger than that of other users, in a mode different from that of other users (step S306). For example, the output control unit 111-3 highlights user hidden status information with a large difference.

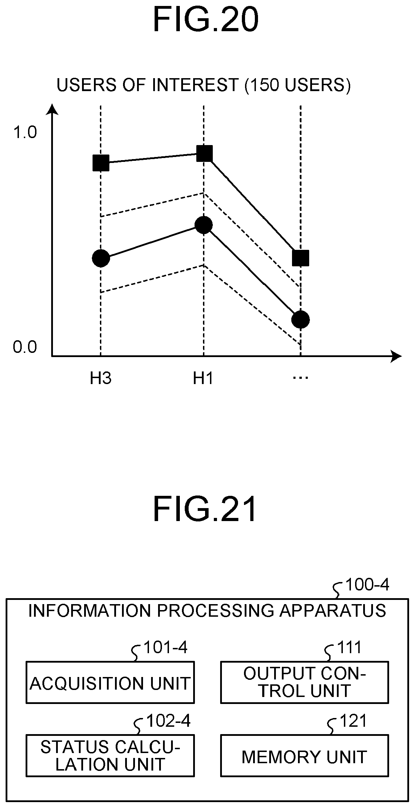

Fig. 20 is a diagram illustrating an example of display of statistical information on user hidden status information for users of interest. The squares indicate statistical information for all users, and the circles indicate statistical information for the users of interest. Fig. 20 illustrates an example of how to highlight user hidden status information with large differences, by displaying the user hidden status information in the order in which the differences in mean values between all users and the users of interest are large. Displaying H3 and H1, which have large differences, on the left side allows the analyst to immediately discover hidden statuses that are characteristic of the users of interest.

In this manner, users of interest can be specified, and output can be controlled according to the difference in the hidden statuses between the specified users of interest and all users in the third arrangement. This will further reduce the workload of user analysis utilizing purchasing data.

### Fourth Arrangement

An information processing apparatus according to the fourth arrangement specifies known product hidden status information or user hidden status information, and reflects the known product-hidden status relation or user-hidden status relation in the calculation of product hidden status information and user hidden status information for new purchasing data.

Fig. 21 is a block diagram illustrating an example of a configuration of an information processing apparatus 100-4 according to the fourth arrangement. As illustrated in Fig. 21, the information processing apparatus 100-4 includes an acquisition unit 101-4, a status calculation unit 102-4, the output control unit 111, and the memory unit 121.

In the fourth arrangement, the functions of the acquisition unit 101-4 and the status calculation unit 102-4 differ from those of the first arrangement. Other configurations and functions are the same as those in Fig. 1, which is a block diagram of the information processing apparatus 100 according to the first arrangement, and the same reference signs are thus given and the explanation here is omitted.

The acquisition unit 101-4 differs from the acquisition unit 101 of the first arrangement in that it further includes a function to acquire known information, which is at least one of user hidden status information obtained in the past and product hidden status information obtained in the past.

The status calculation unit 102-4 differs from the status calculation unit 102 of the first arrangement in that it performs matrix factorization by using the known information as an initial value.

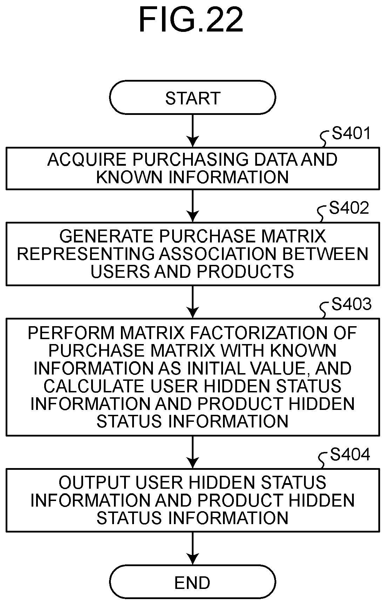

Analysis support processing by the information processing apparatus 100-4 according to the fourth arrangement will be described next with reference to Fig. 22. Fig. 22 is a flowchart illustrating an example of the analysis support processing in the third arrangement.

The acquisition unit 101-4 acquires purchasing data and known information (step S401). A result of previous processing performed by the information processing apparatus 100-4 can be used for the known information. For example, the acquisition unit 101-4 acquires the product hidden status information as illustrated in Fig. 7 as known information.

The status calculation unit 102-4 performs matrix factorization on the latest purchasing data by using such known information as an initial value. This enables calculation of how many hidden statuses corresponding to previously revealed purchase patterns are held by users of the latest purchasing data.

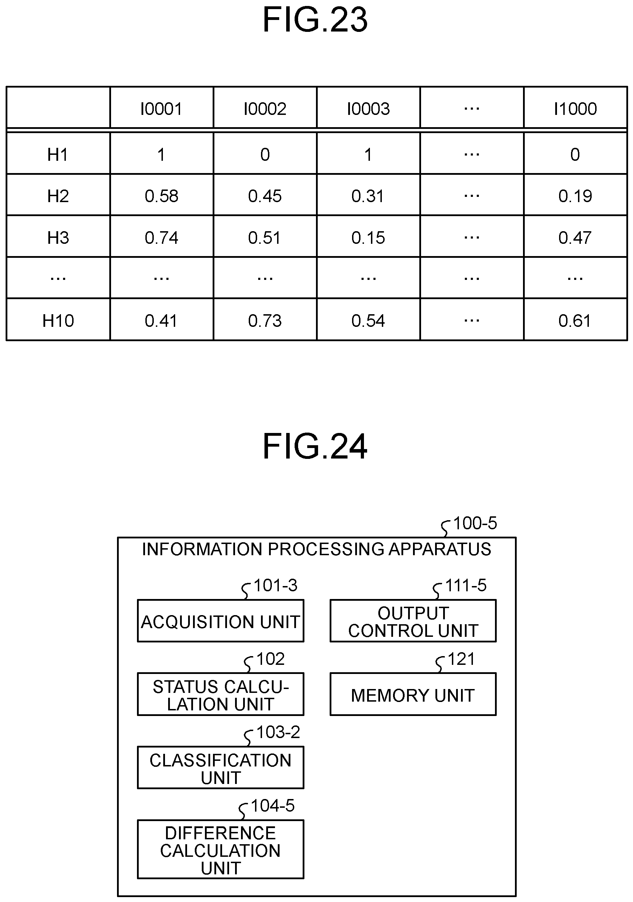

Known information may be set to reflect the analyst's findings. Fig. 23 is a diagram illustrating an example of known information set in this manner. For example, assume that findings that a product with product ID "I0001" and a product with product ID "I0003" tend to be purchased at the same time have been made as a purchase pattern. Based on the findings, Fig. 23 ties the two products together with a value of 1 in "I0001" and "I0003" for the hidden status H1. Other hidden statuses have random initial values set as other relations are unknown.

The description returns to Fig. 21. The status calculation unit 102-4 performs matrix factorization of the purchase matrix by using the known information as an initial value, and calculates user hidden status information and product hidden status information (step S403). Step S404 is the same as S104 of the first arrangement, and the explanation thereof is thus omitted.

In matrix factorization, processing of updating the matrix element values is performed repeatedly, starting from the initial value. During matrix factorization, the status calculation unit 102-4 may factorize the matrix with the known portion of the hidden status information fixed (without having it updated), or may factorize the matrix with the known portion also updated. In the former case, because the known purchase patterns are not updated, it is possible to calculate how past purchase patterns are weighted for each user in the latest purchasing data. In the latter case, because the known purchase patterns are updated, purchase patterns can be updated when purchase patterns change slightly due to product turnover, for example.

Using known information as an initial value enables can bring about a further improvement in accuracy of matrix factorization as compared with, for example, a case where a random initial value is used.

### Fifth Arrangement

An information processing apparatus according to the fifth arrangement includes a function to classify a plurality of users into clusters as in the second arrangement, and a function to acquire specification of users of interest as in the third arrangement. The information processing apparatus of the present arrangement calculates a cluster ratio, which is the ratio of the number of users in each cluster to the number of users in all clusters, for the users of interest and all users. Furthermore, the information processing apparatus of the present arrangement highlights clusters in which the difference between the cluster ratio of all users and the cluster ratio of the users of interest is large.

Fig. 24 is a block diagram illustrating an example of a configuration of an information processing apparatus 100-5 according to the fifth arrangement. As illustrated in Fig. 24, the information processing apparatus 100-5 includes an acquisition unit 101-3, the status calculation unit 102, the classification unit 103-2, a difference calculation unit 104-5, an output control unit 111 -5, and the memory unit 121.

The acquisition unit 101-3 is the same as that in the third arrangement, and the classification unit 103-2 is the same as that in the second arrangement. In the present arrangement, the difference calculation unit 104-5 is added and the function of the output control unit 111-5 is changed. Other configurations and functions are the same as those in Fig. 1, which is a block diagram of the information processing apparatus 100 according to the first arrangement, and the same reference signs are thus given and the explanation here is omitted.

The difference calculation unit 104-5 calculates the difference between the cluster ratio for all users and the cluster ratio for users of interest. For example, the difference calculation unit 104-5 calculates, for individual clusters CA (first cluster) included in a plurality of clusters, a cluster ratio RA, which represents the ratio (first ratio) of the number of users belonging to a cluster CA to the number of users belonging to all clusters for all users. The difference calculation unit 104-5 also calculates, for individual clusters CA, a cluster ratio RB, which represents the ratio (second ratio) of the number of users belonging to a cluster CA to the number of users belonging to all clusters for users of interest. The difference calculation unit 104-5 then calculates the difference between the cluster ratio RA and the cluster ratio RB.

The output control unit 111-5 further outputs information indicating clusters the difference calculated by the difference calculation unit 104-5 for which is larger than that of other clusters, in a mode different from that of other clusters.

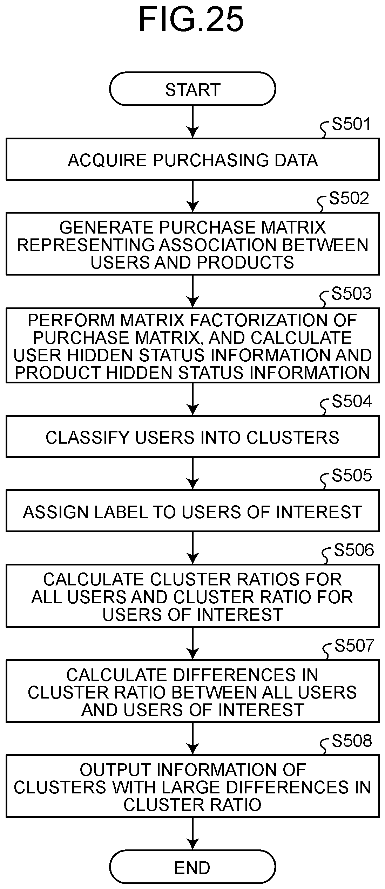

Analysis support processing by the information processing apparatus 100-5 according to the fifth arrangement will be described next with reference to Fig. 25. Fig. 25 is a flowchart illustrating an example of the analysis support processing in the fifth arrangement.

Steps S501 through S504 are the same as steps S201 through S205 (Fig. 12) in the information processing apparatus 100-2 according to the second arrangement, and the explanation of these steps is thus omitted.

At step S505, in the same manner as step S304 (Fig. 17) of the third arrangement, the acquisition unit 101-3 assigns an attention user label to a user of interest (step S505). This assigns each user an attention user label in addition to a result of classification into clusters.

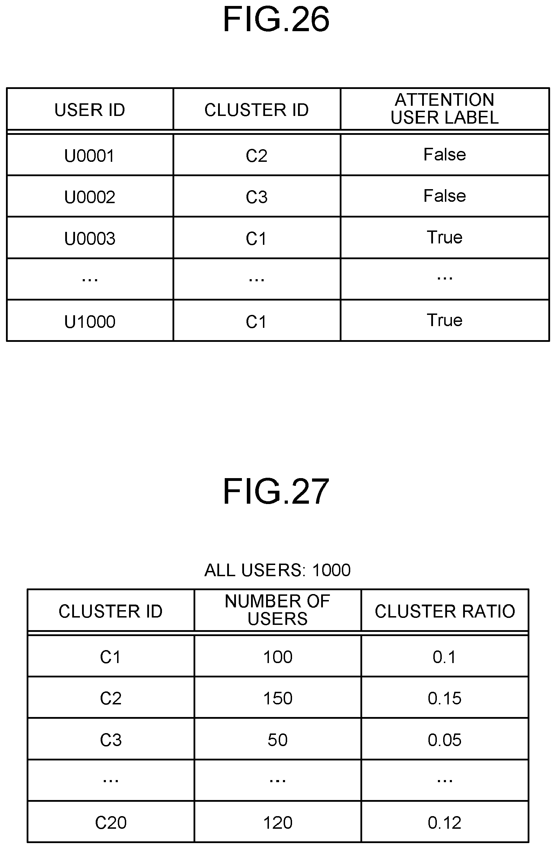

Fig. 26 is a diagram illustrating an example of a result of classification into clusters and attention user labels. In Fig. 26, each user is assigned a cluster ID for the cluster into which the user is classified and an attention user label. As in Fig. 18, "True" is assigned as an attention user label if the user is a user of interest, and "False" otherwise.

The description returns to Fig. 25. The difference calculation unit 104-5 calculates the cluster ratio RA for all users and the cluster ratio RB for users of interest (step S506) .

Fig. 27 is a diagram illustrating an example of the cluster ratios RA to all users. In Fig. 27, for example, the total number of users is 1,000 and the number of users belonging to cluster C1 is 100, so that the cluster ratio RA for cluster C1 is calculated to be 0.1.

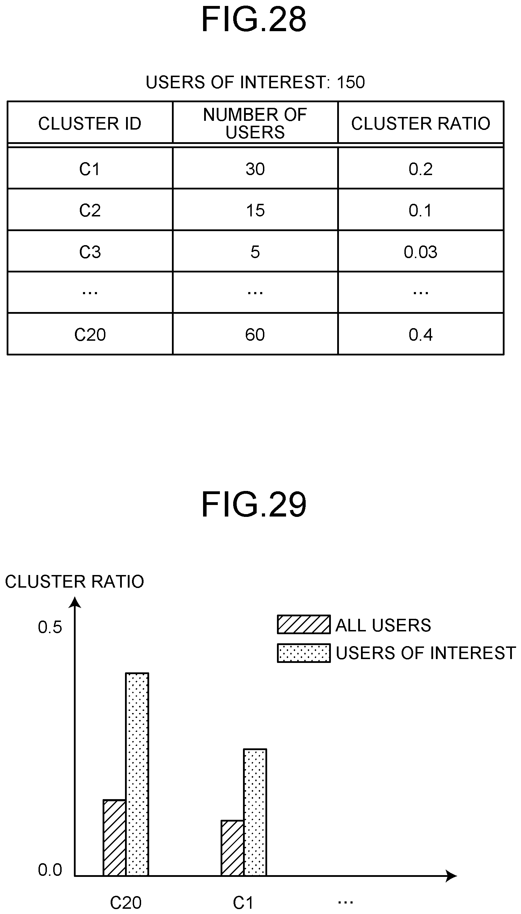

Fig. 28 is a diagram illustrating an example of the cluster ratios RB to users of interest. As illustrated in Fig. 28, the number of users belonging to each cluster is calculated only for users the attention user label of which is "True". In Fig. 28, for example, the total number of users of interest is 150 and the number of users of interest belonging to cluster C1 is 30, so that the cluster ratio RB for cluster C1 is calculated to be 0.2.

The description returns to Fig. 25. The difference calculation unit 104-5 calculates the difference between the cluster ratio RA for all users and the cluster ratio RB for users of interest. For example, the difference in the cluster ratio for cluster C1 is 0.2 - 0.1 = 0.1, which is the cluster ratio RB for the users of interest minus the cluster ratio RA for all users.

The output control unit 111-5 highlights the information of clusters with large differences in cluster ratio (cluster information) (step S508).

Fig. 29 is a diagram illustrating an example of display of cluster information with large differences in cluster ratio. In Fig. 29, the cluster ratios of all users and the cluster ratios of the users of interest are displayed as a bar graph in order of the difference in cluster ratios. The display in Fig. 29 allows the analyst to confirm that the ratios of clusters C20 and C1 are larger for the users of interest than for the whole, and to confirm what type of purchasing preferences the users of interest tend to have by combining this with the information in Figs. 9 and 13.

### Example of Display Screen

The output control units (output control unit 111, output control unit 111-2, output control unit 111-3, and output control unit 111-5) of the first through fifth arrangements may summarize and display user information, product information, time information of purchase, and other information. This makes it easier for the analyst to develop purchasing preference types.

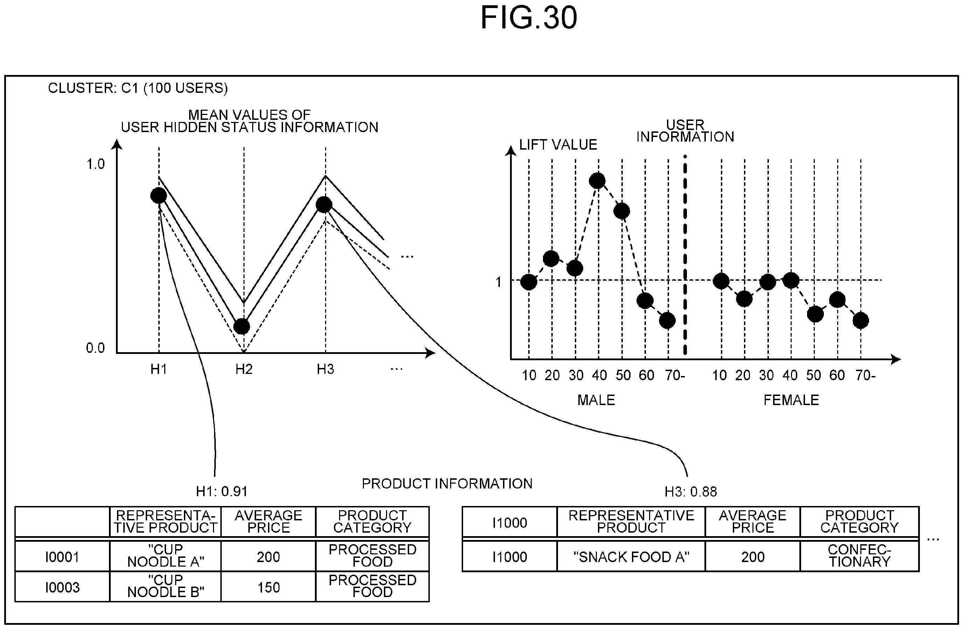

Fig. 30 is a diagram illustrating an example of a screen displaying user and product information in addition to the processing results in the second arrangement. In the screen example in Fig. 30, statistics of the user and product information are displayed in addition to the mean values of the user hidden status information for cluster C1 illustrated in the second arrangement.

In the user information, lift values, each of which is the ratio of the ratio of the age and gender of users belonging to cluster C1 to the ratio of the age and gender of all users, are illustrated. In the product information, the average price and product category of the products are illustrated for the user hidden status information with high values.

By looking at the information in Fig. 30, the analyst can easily understand that there are 100 users who purchase cup noodles and snacks as the target of analysis, with a high ratio of males in their 40s and 50s. In addition, with background knowledge such as standard prices for a product category, the analyst can infer price-related purchasing preference types, such as being upmarket and being fond of sale.

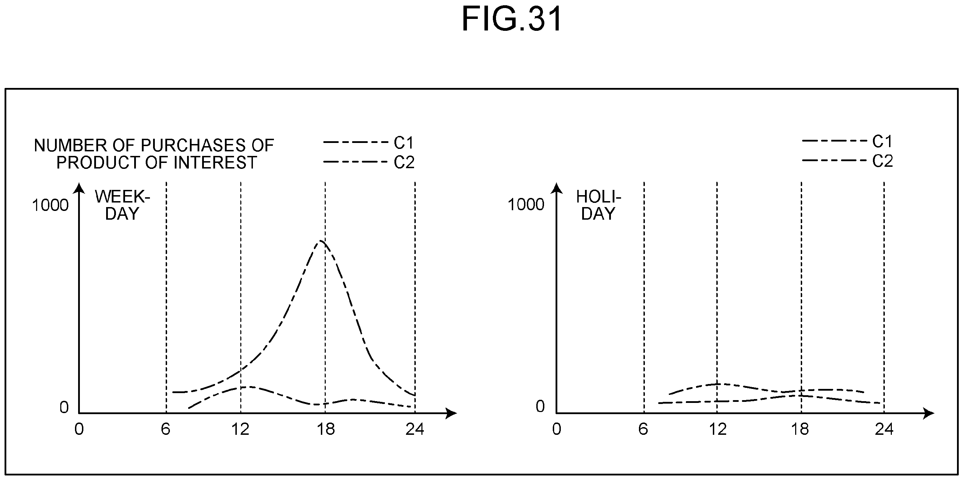

Fig. 31 is a diagram illustrating an example of a screen plotting the number of purchases per hour of a certain product of interest by cluster, on the basis of the processing results in the second arrangement. The screen example in Fig. 31 illustrates that users belonging to cluster C1 often purchase products near 6:00 p.m. on weekdays for the product of interest on which the analyst pays attention. The time pattern of purchases for the product of interest for each cluster can be seen from Fig. 31, and thus, in conjunction with the information in Fig. 30, the analyst can understand the temporal characteristics of each cluster and obtain useful information for developing purchasing preference types.

As explained above, according to the first through fifth arrangements, the workload of user analysis utilizing purchasing data can be reduced.

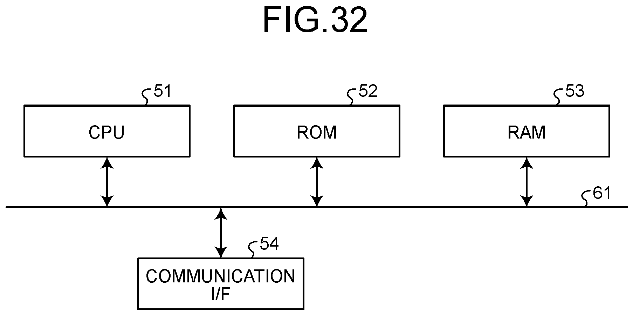

A hardware configuration of the information processing apparatus according to the first through fifth arrangements will be described next with reference to Fig. 32. Fig. 32 is a diagram illustrating an example of the hardware configuration of the information processing apparatus according to the first through fifth arrangements.

The information processing apparatus of the first through fifth arrangements include a controller such as a CPU 51, a storage device such as read only memory (ROM) 52 and RAM 53, a communication I/F 54 that connects to a network for communication, and a bus 61 that connects the units.

A computer programs to be executed by the information processing apparatus according to the first through fifth arrangements is provided by being preinstalled in the ROM 52 or the like.

The computer program to be executed by the information processing apparatus according to the first through fifth arrangements may be configured to be provided as a computer program product in an installable or executable format file recorded on a computer-readable recording medium such as compact disc read only memory (CD-ROM), a flexible disk (FD), a compact disc recordable (CD-R), or a digital versatile disc (DVD).

Furthermore, the computer program to be executed by the information processing apparatus according to the first through fifth arrangements may be stored on a computer connected to a network such as the Internet, and may be configured to be provided by having the computer program downloaded via the network. The computer program to be executed by the information processing apparatus according to the first through fifth arrangements may be configured to be provided or distributed via a network such as the Internet.

The computer program to be executed by the information processing apparatus according to the first through fifth arrangements can cause the computer to function as the units of the information processing apparatus described above. The computer is capable of executing a computer program that is read by the CPU 51 from a computer-readable storage medium on its main memory.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. An information processing apparatus includes an acquisition unit, a status calculation unit, and an output control unit. The acquisition unit is configured to acquire a plurality of pieces of purchasing data including any of a plurality of pieces of user identification information identifying a plurality of users, any of a plurality of pieces of product identification information identifying a plurality of products, and performance information including at least one of a price and a number of purchases of the plurality of products. The status calculation unit is configured to perform matrix factorization of a purchase matrix with the plurality of pieces of user identification information and the plurality of pieces of product identification information as row and column indices, respectively, and non-negative values calculated based on the performance information as element values, and calculate user hidden status information indicating a relation between the plurality of pieces of user identification information and hidden statuses related to purchasing, and product hidden status information indicating a relation between the hidden statuses and the plurality of pieces of product identification information. The output control unit is configured to control output of at least one of the user hidden status information and the product hidden status information.

Example 2. The information processing apparatus according to Example 1, further includes a classification unit configured to classify the plurality of pieces of user identification information included in the user hidden status information, into a plurality of clusters by using a degree of similarity between pieces of the user hidden status information.

Example 3. In the information processing apparatus according to Example 2, the output control unit is configured to output statistical information on the user hidden status information for each of the plurality of clusters.

Example 4. The information processing apparatus according to Example 2, further includes a difference calculation unit configured to calculate, for each of first clusters included in the plurality of clusters, a difference between a first ratio of a number of users belonging to the first cluster to a number of users belonging to the plurality of clusters for all users, and a second ratio of a number of users belonging to the first cluster to a number of users belonging to the plurality of clusters for users of interest specified as users to which attention is paid. The output control unit is configured to output information indicating a cluster the difference for which is larger than that of other clusters, in a mode different from that of other clusters.

Example 5. The information processing apparatus according to Example 1, further includes a difference calculation unit configured to calculate differences between the hidden statuses for the plurality of users and the hidden statuses corresponding to users of interest specified as users to which attention is paid among the plurality of users. The output control unit is configured to output the user hidden status information of a user of interest a difference for which is larger than that of other users, in a mode different from that of other users.

Example 6. The information processing apparatus according to Example 5, further includes a classification unit configured to classify a plurality of pieces of user identification information included in the user hidden status information into a plurality of clusters by using a degree of similarity between pieces of the user hidden status information. The users of interest are users identified by the user identification information included in a specified cluster among the plurality of clusters.

Example 7. In the information processing apparatus according to Example 1, the acquisition unit is configured to acquire known information which is at least one of the user hidden status information obtained in a past and the product hidden status information obtained in a past. The status calculation unit is configured to perform the matrix factorization by using the known information as an initial value.

Example 8. In the information processing apparatus according to Example 1, the element value is a non-negative value indicating whether a purchase has been made, the price, or the number of purchases.

Example 9. An information processing method is executed by an information processing apparatus. The information processing method includes: acquiring a plurality of pieces of purchasing data including any of a plurality of pieces of user identification information identifying a plurality of users, any of a plurality of pieces of product identification information identifying a plurality of products, and performance information including at least one of a price and a number of purchases of the plurality of products; performing matrix factorization of a purchase matrix with the plurality of pieces of user identification information and the plurality of pieces of product identification information as row and column indices, respectively, and non-negative values calculated based on the performance information as element values, and calculating user hidden status information indicating a relation between the plurality of pieces of user identification information and hidden statuses related to purchasing, and product hidden status information indicating a relation between the hidden statuses and the plurality of pieces of product identification information; and controlling output of at least one of the user hidden status information and the product hidden status information.

Example 10. A computer-readable medium includes instructions which, when executed by a computer, cause the computer to execute: acquiring a plurality of pieces of purchasing data including any of a plurality of pieces of user identification information identifying a plurality of users, any of a plurality of pieces of product identification information identifying a plurality of products, and performance information including at least one of a price and a number of purchases of the plurality of products; performing matrix factorization of a purchase matrix with the plurality of pieces of user identification information and the plurality of pieces of product identification information as row and column indices, respectively, and non-negative values calculated based on the performance information as element values, and calculating user hidden status information indicating a relation between the plurality of pieces of user identification information and hidden statuses related to purchasing, and product hidden status information indicating a relation between the hidden statuses and the plurality of pieces of product identification information; and controlling output of at least one of the user hidden status information and the product hidden status information.

## Claims

1. An information processing apparatus (100) comprising:
an acquisition unit (101) configured to acquire a plurality of pieces of purchasing data including any of a plurality of pieces of user identification information identifying a plurality of users, any of a plurality of pieces of product identification information identifying a plurality of products, and performance information including at least one of a price and a number of purchases of the plurality of products;
a status calculation unit (102) configured to perform matrix factorization of a purchase matrix with the plurality of pieces of user identification information and the plurality of pieces of product identification information as row and column indices, respectively, and non-negative values calculated based on the performance information as element values, and calculate user hidden status information indicating a relation between the plurality of pieces of user identification information and hidden statuses related to purchasing, and product hidden status information indicating a relation between the hidden statuses and the plurality of pieces of product identification information; and
an output control unit (111) configured to control output of at least one of the user hidden status information and the product hidden status information.

2. The information processing apparatus (100) according to claim 1, further comprising a classification unit (103-2) configured to classify the plurality of pieces of user identification information included in the user hidden status information, into a plurality of clusters by using a degree of similarity between pieces of the user hidden status information.

3. The information processing apparatus (100) according to claim 2, wherein the output control unit (111) is configured to output statistical information on the user hidden status information for each of the plurality of clusters.

4. The information processing apparatus (100) according to claim 2, further comprising a difference calculation unit (104-3) configured to calculate, for each of first clusters included in the plurality of clusters, a difference between a first ratio of a number of users belonging to the first cluster to a number of users belonging to the plurality of clusters for all users, and a second ratio of a number of users belonging to the first cluster to a number of users belonging to the plurality of clusters for users of interest specified as users to which attention is paid, wherein
the output control unit (111) is configured to output information indicating a cluster the difference for which is larger than that of other clusters, in a mode different from that of other clusters.

5. The information processing apparatus (100) according to claim 1, further comprising a difference calculation unit (104-5) configured to calculate differences between the hidden statuses for the plurality of users and the hidden statuses corresponding to users of interest specified as users to which attention is paid among the plurality of users, wherein
the output control unit (111) is configured to output the user hidden status information of a user of interest a difference for which is larger than that of other users, in a mode different from that of other users.

6. The information processing apparatus (100) according to claim 5, further comprising a classification unit (103-2) configured to classify a plurality of pieces of user identification information included in the user hidden status information into a plurality of clusters by using a degree of similarity between pieces of the user hidden status information, wherein
the users of interest are users identified by the user identification information included in a specified cluster among the plurality of clusters.

7. The information processing apparatus (100) according to claim 1, wherein
the acquisition unit (101) is configured to acquire known information that is at least one of the user hidden status information obtained in a past and the product hidden status information obtained in a past, and
the status calculation unit (102) is configured to perform the matrix factorization by using the known information as an initial value.

8. The information processing apparatus (100) according to claim 1, wherein the element value is a non-negative value indicating whether a purchase has been made, the price, or the number of purchases.

9. An information processing method executed by an information processing apparatus (100), the information processing method comprising:
acquiring a plurality of pieces of purchasing data including any of a plurality of pieces of user identification information identifying a plurality of users, any of a plurality of pieces of product identification information identifying a plurality of products, and performance information including at least one of a price and a number of purchases of the plurality of products;
performing matrix factorization of a purchase matrix with the plurality of pieces of user identification information and the plurality of pieces of product identification information as row and column indices, respectively, and non-negative values calculated based on the performance information as element values, and calculating user hidden status information indicating a relation between the plurality of pieces of user identification information and hidden statuses related to purchasing, and product hidden status information indicating a relation between the hidden statuses and the plurality of pieces of product identification information; and
controlling output of at least one of the user hidden status information and the product hidden status information.

10. A computer-readable medium comprising instructions which, when executed by a computer, cause the computer to execute:
acquiring a plurality of pieces of purchasing data including any of a plurality of pieces of user identification information identifying a plurality of users, any of a plurality of pieces of product identification information identifying a plurality of products, and performance information including at least one of a price and a number of purchases of the plurality of products;
performing matrix factorization of a purchase matrix with the plurality of pieces of user identification information and the plurality of pieces of product identification information as row and column indices, respectively, and non-negative values calculated based on the performance information as element values, and calculating user hidden status information indicating a relation between the plurality of pieces of user identification information and hidden statuses related to purchasing, and product hidden status information indicating a relation between the hidden statuses and the plurality of pieces of product identification information; and
controlling output of at least one of the user hidden status information and the product hidden status information.
